# EUROPÄISCHE PATENTSCHRIFT

(11) **EP 2 393 646 B1**
(45) Veröffentlichungstag und Bekanntmachung des Hinweises auf die Patenterteilung: **17.10.2018**
(21) Anmeldenummer: 10700257.8
(22) Anmeldetag: 15.01.2010
(51) Int. Cl.: B29C 47/10, B29C 47/58, B29C 47/76, B29B 13/06

(54) **KUNSTSTOFF-EXTRUDER**
PLASTIC EXTRUDER
EXTRUDEUSE POUR MATIÈRE PLASTIQUE

(30) Priorität: 03.02.2009 AT 1842009
(43) Veröffentlichungstag der Anmeldung: 14.12.2011
(73) Patentinhaber: Starlinger & Co. Gesellschaft m.b.H., 1060 Wien (AT)
(72) Erfinder: LOVRANICH, Christian, A-2564 Weissenbach/Triesting (AT); BRANDSTAETTER, Johann, A-2564 Furth/Triesting (AT); PECHHACKER, Andreas, A-2571 Altenmarkt (AT)
(74) Vertreter: Margotti, Herwig Franz
(86) Internationale Anmeldenummer: PCT/EP2010/050438
(87) Internationale Veröffentlichungsnummer: WO 2010/089173

(56) Entgegenhaltungen:
- EP-A1- 0 938 960
- EP-A2- 0 698 462
- WO-A1-2005/123817
- DE-A1- 3 805 748
- GB-A- 2 270 029
- US-A- 4 130 901

## Beschreibung

Die Erfindung betrifft eine Vorrichtung zum Extrudieren von thermoplastischem Kunststoffgut, die ein Extrudergehäuse umfasst, in dem eine durch eine Antriebsvorrichtung angetriebene Extruderschnecke um ihre Achse drehbar gelagert ist und das eine Einzugsöffnung aufweist, an die ein Kunststoffgut-Förderer angeschlossen ist, der mindestens eine Luft-Einlassöffnung aufweist, wobei das Extrudergehäuse stromaufwärts von der Einzugsöffnung mindestens eine Dampf-Auslassöffnung aufweist und von der Einzugsöffnung zur Dampf-Auslassöffnung ein Luft/Dampfpfad definiert ist, wobei an der Extruderschnecke im Bereich des Luft/Dampfpfads ein Gegengewinde angeordnet ist und das Gegengewinde dieselbe Gangrichtung aufweist wie die Schneckenwendel der Extruderschnecke.

Bevor thermoplastische Kunststoffabfälle dem eigentlichen Recycling zugeführt werden können, müssen diese rein vorliegen. Dazu werden sie beispielsweise in die einzelnen Fraktionen Polyolefine - als Vertreter seien hier Polyethylen (PE) sowie Polypropylen (PP) genannt-, Polyvinylchlorid (PVC) und Polystyrol (PS) getrennt und es werden anhaftende Fremdstoffe, wie beispielsweise Metalle oder Farben meist mit physikalischen Verfahren entfernt. Die sortenreinen Kunststoffabfälle werden üblicherweise danach mit Wasser gereinigt und anschließend mit gängigen Verfahren der Kunststoffverarbeitung aufbereitet. Zu diesen Verfahren gehört beispielsweise die Extrusion.

Problematisch bei der Verarbeitung von gesammelten Kunststoffabfällen sind dabei die stark schwankenden Betriebsbedingungen bei der Beschickung derartiger Recyclinganlagen. Es müssen unterschiedliche Gehalte an Restfeuchte, Verschmutzungen, Dichteschwankungen und Aufgabeportionen beherrscht werden, um aus einem heterogenen Abfall ein homogenes Produkt mit gleichbleibender Produktqualität zu erzielen.

Durch die schwankenden Betriebsbedingungen insbesondere bei der Verarbeitung von feuchtem Kunststoffgut wird die Leistung eines Extruders negativ beeinflusst. Die Feuchte wirkt sich negativ durch eine reduzierte und schwankende Ausstoßleistung des Extruders, durch ungleichmäßige Aufschmelzleistung und damit reduzierte Produktqualität sowie durch einen erhöhten Verschleiß und insgesamt durch eine reduzierte Produktivität der gesamten Vorrichtung aus.

Aus dem Stand der Technik ist beispielsweise die Patentschrift US 6,126,100 bekannt, die eine Vorrichtung zur kombinierten Zerkleinerung und Extrusion von thermoplastischem Kunststoffmaterial vorstellt, die im Bereich eines Befüllbehälters für das aufzubereitende, feuchte Material auch einen Abschnitt zu dessen Trocknung vorsieht. In diesem Abschnitt ist oberhalb der Zerkleinerungseinrichtung eine Düse zum Einblasen von trockener, vorgewärmter Luft vorgesehen. Am oberen Ende des Trocknungsabschnittes befindet sich ein Auslass zur Abfuhr der feuchten Abluft, die in eine Trocknungseinheit außerhalb der Vorrichtung gelangt, dort getrocknet wird, und damit wieder als trockene Zuluft zur Verfügung steht.

Nachteilig an dieser Ausführung ist, dass die der Zerkleinerungseinrichtung nachgeschaltete und unterhalb dieser gelegene Extruderschnecke von der trockenen Luft aus der Einblasdüse nicht durchspült wird. Der Gehalt an Restfeuchte im zerkleinerten Kunststoffgut kann in dieser Ausführung aus der Extruderschnecke nicht mehr abgeführt werden und beeinträchtigt daher die Produktivität der Vorrichtung. Außerdem kommt es aufgrund der Kondensatbildung im Bereich der Zerkleinerungseinrichtung und des Extruders zu verstärkter Korrosionsbildung.

EP 638 017 B1 zeigt ein Verfahren und eine Vorrichtung zum Recycling von begastem Kunststoffmaterial wie beispielsweise geschäumtes Polystyrol. In dieser Vorrichtung wird der Kunststoff aufgeschmolzen, filtriert, entgast, granuliert und durch Zufuhr bzw. Beimischung von Treibgas wieder begast. Dabei gelangt das aus dem Recycling zugeführte Kunststoff-material zuerst in eine als Reißverdichter ausgebildete Zerkleinerungsvorrichtung und wird anschließend über eine Austragsöffnung direkt in einen schneckenförmigen Extruder gefördert, in dem das Kunststoffmaterial plastifiziert und dabei entgast wird. Eine Zufuhr von Luft zum Trocknen des Kunststoffmaterials ist weder im Bereich der Zerkleinerungsvorrichtung, noch im Extruder vorgesehen. Danach wird der als Zwischenprodukt vorliegende plastifizierte bzw. schmelzeartige Kunststoff in einem Filter von Verunreinigungen befreit und zur Wiederbegasung in einen Mischer gepumpt. Dieser Mischer kann - vergleichbar mit einem Extruder - eine Mischerschnecke mit einem außen liegenden Motorantrieb aufweisen oder alternativ dazu anstelle der rotierenden Mischerschnecke einen statischen Mischer ohne angetriebene Teile umfassen und gewährleistet damit, dass das Treibgas in das zugeführte, schmelzeartige Kunststoffzwischenprodukt eingearbeitet wird und somit wiederum ein geschäumtes Kunststoffmaterial entsteht. Sowohl die Extruderschnecke, als auch die Mischerschnecke weisen an ihren den Antrieben zugewandten Enden jeweils einen Abschnitt mit in Gegenrichtung fördernden Schneckengängen auf. Dieser Abschnitt bildet damit eine Abdichtung der Antriebswellen gegenüber der Gehäusedurchführung nach außen, eine Durchspülung mit Luft oder Treibgas findet hier nicht statt. Auch in dieser Ausführung wird durch die Restfeuchte des gesammelten Kunststoffmaterials zumindest die Produktivität des Extruders beeinträchtigt.

In AT 413 354 B wird eine Aufbereitungseinrichtung für vorzugsweise thermoplastisches Kunststoffmaterial vorgestellt, die eine Zerkleinerungsvorrichtung mit einer unmittelbar daran anschließenden Extrudiervorrichtung aufweist. Das aufzubereitende Kunststoffgut wird in eine Aufgabevorrichtung gefüllt und gelangt von dort zu einer rotierenden Aufbereitertrommel, an deren Umfang mehrere Reihen von mitdrehenden Messern versetzt angebracht sind. Durch Gegenmesser, die gegenüber der rotierenden Aufbereitertrommel ortsfest am Rahmen der Zerkleinerungsvorrichtung vorgesehen sind, wird der Kunststoff zerkleinert und gelangt anschließend in ein Förderrohr, das sich unterhalb der Aufbereitertrommel befindet. An der Innenwand dieses Förderrohres sind an der tiefsten Stelle mit einem dazwischen liegenden Abstand zwei Einblasdüsen für Druckluft angebracht, die in Richtung der Austrittsöffnung des Förderrohres zur nachgeschalteten Extruderschnecke ausgerichtet sind. Durch das Einblasen von Druckluft wird die Bewegung des Kunststoffmaterials in Richtung der Austrittsöffnung des Förderrohrs unterstützt. Damit wird eine pneumatische Förderung des Kunststoffmaterials durch das Förderrohr in den Extruder erreicht.

Nachteilig an dieser Ausführung ist, dass durch die eingeblasene Druckluft keine Trocknungswirkung erzielt wird. Auslassöffnungen für die Abfuhr der feuchten Luft sind nicht vorgesehen. Durch die pneumatische Förderung des zerkleinerten Kunststoffmaterials gelangt somit auch die Restfeuchte direkt in den Extruder und führt dabei zu den eingangs erwähnten Problemen bei der Betriebsführung.

DE 38 05 748 A1 offenbart eine Vorrichtung zum Extrudieren von thermoplastischem Kunststoffgut mit einem Rückförderabschnitt.

Es besteht also Bedarf zur Verringerung der Nachteile des Stands der Technik derartiger Vorrichtungen, die Kunststoffabfall mit unterschiedlichem Gehalt an Restfeuchte nach der vorherigen Zerkleinerung über eine Einzugsöffnung einem Extruder zuführen. Es soll eine Vorrichtung zur Verfügung gestellt werden, die vorzugsweise im kontinuierlichen Betrieb eine effiziente Trocknung feuchter Kunststoffabfälle auch im Extruder gewährleistet und somit eine konstante Durchsatzleistung des Extruders, sowie eine gleichbleibend hohe Produktqualität des extrudierten Materials weitestgehend unabhängig von Qualitätsschwankungen des Einsatzmaterials ermöglicht.

Die vorliegende Erfindung löst diese Aufgaben durch Bereitstellen einer Vorrichtung zum Extrudieren von thermoplastischem Kunststoffgut, wobei das Gegengewinde an der Extruderschnecke im Bereich des Luft/Dampfpfads mit einer im Vergleich zur Steigung der Schneckenwendel der Extruderschnecke geringeren Steigung ausgestattet ist.

Der Begriff "stromaufwärts" bezieht sich auf die Materialförderrichtung der im Extrudergehäuse rotierenden Extruderschnecke.

Vorteilhafte Ausgestaltungen der Erfindung sind in den abhängigen Ansprüchen und der Beschreibung dargestellt.

Die vorliegende Erfindung bietet die folgenden Vorteile gegenüber dem bekannten Stand der Technik:
- Die Vorrichtung kann vollkontinuierlich und wartungsarm betrieben werden und es kann thermoplastisches Kunststoffgut, das vorzugsweise zuvor bereits zerkleinert wurde, auch mit einem Gehalt an Restfeuchte direkt im kontinuierlich arbeitenden KunststoffExtruder eingesetzt werden.
- Durch die noch vorhandene Restfeuchte im zugeführten Kunststoffgut kommt es zu keiner Beeinträchtigung der Produktivität des Extruders. Weder die Ausstoßleistung, noch die Aufschmelzleistung des Extruders werden dadurch reduziert.
- Durch die Feuchte kommt es bei aus dem Stand der Technik bekannten derartigen Vorrichtungen im Bereich der für die Materialzufuhr vorgesehenen Dosierschnecke bzw. direkt anschließend im Extruder zu erhöhtem Materialverschleiß und zu einer erhöhten Korrosionsneigung. Diese Materialbelastung entfällt im Betrieb der erfindungsgemäßen Vorrichtung.
- Durch den gleichmäßigen Betrieb und die damit erhöhte Produktivität ist die erfindungsgemäße Vorrichtung wirtschaftlicher zu betreiben als bisher bekannte Extruder, welche für sich ständig ändernde Betriebsparameter bei der Verarbeitung von Kunststoffabfall nicht oder nur unzureichend ausgelegt sind und für die keine Vorkehrungen getroffen sind, die Restfeuchte des Kunststoffmaterials verlässlich aus dem Inneren des Extruders abführen zu können.
- Durch die Ausführung des Extrudergehäuses mit mindestens einer Dampf-Auslassöffnung, die entgegengesetzt zur Förderrichtung des Kunststoffmaterials im Extruder stromaufwärts angebracht und dadurch vor Verblockungen geschützt ist, wird das Kunststoffgut im Extruder getrocknet. Damit wird eine Kondensatbildung im Inneren der gesamten Vorrichtung zuverlässig verhindert.

In einer vorteilhaften Ausführungsform der Extrusionsvorrichtung verläuft der Luft/Dampfpfad in einem Spalt zwischen der Innenfläche des Extrudergehäuses und der Extruderschnecke. Durch den spaltförmigen Querschnitt wird eine zuverlässige Abfuhr der Feuchte entlang des Luft/Dampfpfades zur Auslassöffnung gewährleistet, auch wenn sich einzelne Kunststoffpartikel in diesem Abschnitt des Extruders befinden sollten.

Die Extrusionsvorrichtung ist derart ausgestattet, dass an der Extruderschnecke im Bereich des Luft/Dampfpfads ein Gegengewinde angeordnet ist, dessen Gewinde dieselbe Gangrichtung aufweist wie die Schneckenwendel der Extruderschnecke. Damit wird erreicht, dass bei Drehung der Extruderschnecke das Gegengewinde, welches in einem stromaufwärts von der Einzugsöffnung gelegenen Abschnitt der Extruderschnecke vorgesehen ist, in diesem Abschnitt entgegen der Förderrichtung des Kunststoffmaterials wirkt. Dadurch wird in diesem Abschnitt allenfalls vorhandenes Kunststoffgut von der Dampf-Auslassöffnung weg in Extrusionsrichtung gefördert und somit vorteilhaft der Austritt von Kunststoffgut aus der Dampf-Auslassöffnung verhindert sowie der Luft/Dampfpfad frei gehalten. Die feuchte Luft strömt in diesem Abschnitt entlang des Luft/Dampfpfads im Gegenstrom zur Förderrichtung des Gegengewindes zur Auslassöffnung hin.

Das Gegengewinde ist an der Extruderschnecke im Bereich des Luft/Dampfpfads mit einer im Vergleich zur Steigung der Schneckenwendel der Extruderschnecke geringeren Steigung und Gangtiefe ausgestattet. Zwischen dem Gegengewinde und dem Extrudergehäuse kann eine Spaltbreite von weniger als 1 mm, vorzugsweise von weniger als 0,5 mm vorhanden sein. Durch die geringere Steigung des Gegengewindes, welches im stromaufwärts von der Einzugsöffnung gelegenen Abschnitt direkt an die Schneckenwendel der Extruderschnecke anschließt, wird Kunststoffmaterial langsamer aus diesem Abschnitt abtransportiert als in der vorgesehenen Förderrichtung zur Extrusion hin. Kleinere Mengen an Kunststoffgut, die entgegen der Förderrichtung in diesen Abschnitt gelangen, werden vom Gegengewinde sicher abtransportiert und damit werden Verblockungen vermieden. Die vorzugsweise geringe Spaltbreite zwischen dem Gegengewinde und dem Extrudergehäuse trägt ebenfalls dazu bei, dass keine größeren Kunststoffteile stromaufwärts von der Einzugsöffnung gelangen können und den Luft/ Dampfpfad im Bereich des Gegengewindes verblocken.

In einer weiteren vorteilhaften Ausführungsform zur Lösung der erfindungsgemäßen Aufgabe ist die Extrusionsvorrichtung mit einer Dampf-Absaugvorrichtung versehen, die an die Dampf-Auslassöffnung angeschlossen ist. Mit der Dampf-Absaugvorrichtung wird der Austrag an feuchter Luft bzw. Dampf aus der Extrusionsvorrichtung weiter verstärkt und die Trocknungsgeschwindigkeit des feuchten Kunststoffguts vorteilhaft erhöht.

Eine derartige Dampf-Absaugvorrichtung kann vorzugsweise als Seitenkanalverdichter ausgebildet sein. Diese Verdichterbauart ist besonders robust und für alle Anwendungen geeignet, bei denen mehr Druck bzw. Unterdruck benötigt wird als herkömmliche Ventilatoren erzeugen können. Vorteilhafterweise ist bei derartigen Verdichtern keine Schmierung notwendig, der Verdichtungsvorgang erfolgt absolut ölfrei und ohne Verunreinigung des Gases.

Eine weitere vorteilhafte Ausführung einer Extrusionsvorrichtung ist derart gestaltet, dass zwischen der Dampf-Auslassöffhung und der Dampf-Absaugvorrichtung ein Wasserabscheider angeschlossen ist. Durch einen Wasserabscheider, der saugseitig vor der Dampf-Absaugvorrichtung, beispielsweise einem Seitenkanalverdichter, vorgesehen ist, wird die Dampf-Absaugvorrichtung vor Korrosion geschützt und die Feuchte der Abluft gezielt gesammelt und abgeführt.

In den beiden Zeichnungen ist eine mögliche Ausführung des Erfindungsgegenstands in unterschiedlichen Ansichten schematisch dargestellt.
Fig. 1 zeigt die Extrusionsvorrichtung 1 in der Draufsicht, wobei der Extruder 2 sowie der Kunststoffgut-Förderer 3 teilweise aufgeschnitten dargestellt sind.
Fig. 2 zeigt ein Detail einer besonderen Ausführung der Extrusionsvorrichtung 1 in der Draufsicht, wobei ebenfalls Teile des Extruders 2 sowie des Kunststoffgut-Förderers 3 in einer Schnittansicht gezeigt werden.

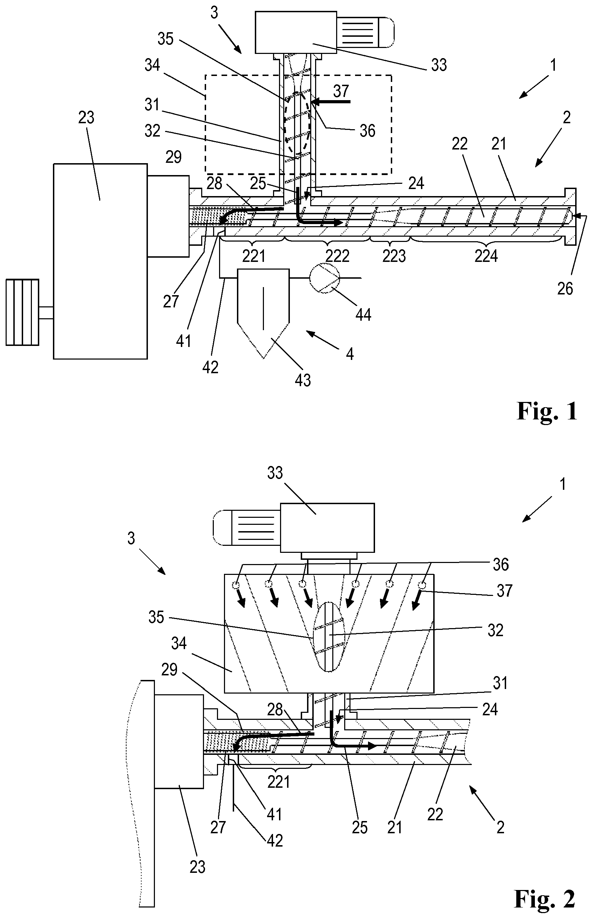

Fig. 1 stellt eine Ausführung der erfindungsgemäßen Extrusionsvorrichtung 1 mit den wesentlichen Einheiten Extruder 2, Kunststoffgut-Förderer 3 sowie der Vorrichtung zur Dampfabfuhr 4 dar.

Der Extruder 2 umfasst ein zylindrisch geformtes Extrudergehäuse 21 mit einer darin befindlichen, um ihre Achse drehbar gelagerten Extruderschnecke 22, die an einem Ende mit einer Antriebsvorrichtung 23 verbunden ist und von dieser angetrieben wird. Das Extrudergehäuse 21 weist eine Einzugsöffnung 24 auf, durch die in Pfeilrichtung 25 das zerkleinerte Kunststoffgut aus dem Kunststoffgut-Förderer 3 in den Extruder 2 bzw. in die Extruderschnecke 22 gelangt und von dieser weiter zur Austragsöffnung 26 des Extruders 2 gefördert wird. Am gegenüberliegenden Ende des Extruders 2 befindet sich ein Abschnitt mit einem Gegengewinde 27, der direkt an den Abschnitt mit Schneckengewinde auf der Extruderschnecke 22 angrenzt und an dieser angeordnet ist. Das Gegengewinde 27 befindet sich an der Extruderschnecke 22 stromaufwärts von der Einzugsöffnung 24 direkt an die Antriebsvorrichtung 23 angrenzend. Gegenüber dem feststehenden Extrudergehäuse 21 weist das sich mit der Extruderschnecke 22 in gleicher Richtung mitdrehende Gegengewinde 27 eine nur geringe Spaltbreite 29 auf. In Fig. 1 ist das Extrudergehäuse 21 in achsialer Richtung geschnitten dargestellt, sodass die innen liegende Extruderschnecke 22 samt dem Abschnitt mit Gegengewinde 27 zu sehen ist. Die einzelnen Abschnitte sind der Reihe nach bezeichnet. Der Abschnitt 221 auf der Extruderschnecke 22 befindet sich stromaufwärts von der Einzugsöffnung 24 und reicht bis zur Dampf-Auslassöffhung 41. Der Abschnitt 222 auf der Extruderschnecke 22 wird auch als Einzugszone bezeichnet und reicht von der Einzugsöffnung 24 bis zur Kompressionszone 223. In der Einzugszone 222 wird das zu extrudierende Kunststoffmaterial in den Extruder 2 eingespeist, aufgeschmolzen und verdichtet. Direkt an die Einzugszone 222 schließt die Kompressionszone 223 an, in der das Material durch die verringerte Gangtiefe im konischen Teil der Extruderschnecke 22 weiter verdichtet wird. In der folgenden Austragszone 224 wird der für den Austrag des Materials notwendige Druck aufgebaut und somit die Förderung in ein nachfolgendes, nicht dargestelltes Werkzeug gewährleistet.

Der Kunststoffgut-Förderer 3 umfasst ein zylindrisches Gehäuse 31 mit einer in seinem Inneren befindlichen Dosierschnecke 32, die - vergleichbar mit der zuvor beschriebenen Extruderschnecke 22 - ebenfalls mit einem Schneckengewinde ausgestattet um ihre Achse drehbar gelagert ist. Weiters umfasst der Kunststoffgut-Förderer 3 eine Antriebsvorrichtung 33, die die Welle der Dosierschnecke 32 antreibt. Wie in Fig. 1 strichliert eingezeichnet befindet sich oberhalb des Förderers 3 vorzugsweise eine Zerkleinerungsvorrichtung 34 für größeres Aufgabegut, um durch die Verarbeitung von in dieser Zerkleinerungsvorrichtung 34 zerkleinertem Kunststoffgut einen störungsfreien Betrieb in der nachfolgenden Extrusionsvorrichtung 1 zu gewährleisten. Die Zerkleinerungsvorrichtung 34 weist an ihrer Unterseite eine Öffnung 35 zur Materialzufuhr des Kunststoffgutes in die Dosierschnecke 32 auf. Von der Dosierschnecke 32 wird das zerkleinerte Kunststoffgut erfasst und durch die Einzugsöffnung 24 in Richtung 25 in den Extruder 2 transportiert, wo es von der Extruderschnecke 22 stromabwärts in Richtung der Austragsöffnung 26 weiter befördert wird. Ein geringer Teilstrom des Kunststoffgutes kann beispielsweise bei zu hoher Fördergeschwindigkeit der Dosierschnecke 32 auch in den Abschnitt 221 der Extruderschnecke 22 gelangen, der sich stromaufwärts von der Einzugsöffnung 24 befindet. In diesem Abschnitt 221, in dem wie in Fig. 1 dargestellt direkt an der Einzugsöffnung 24 die Extruderschnecke 22 mit einer Schneckenwendel mit derselben Steigung wie in den Abschnitten 222, 223 und 224 ausgestattet ist und anschließend weiter stromaufwärts gelegen die Extruderschnecke 22 ein Gegengewinde 27 mit im Vergleich zur Steigung der Schneckenwendel geringerer Steigung aufweist, kann das Kunststoffgut von der Einzugsöffnung 24 weg entgegen der Förderrichtung der Extruderschnecke 22 nur zwangsweise gefördert werden, beispielsweise wenn der Extruder 2 an seinem freien Ende im Bereich der Austragsöffnung 26, im Bereich der Kompressionszone 223 oder in der Austragszone 224 verblockt ist. Im normalen Betrieb werden Kunststoffteile, die irrtümlich im Gegenstrom zur Förderrichtung in den Abschnitt 221 der Extruderschnecke 22 gelangen, zuverlässig wieder in der erwünschten Transportrichtung 25 in Richtung zur Austragsöffnung 26 abtransportiert.

Das Gehäuse 31 des Kunststoffgut-Förderers 3 ist mit mindestens einer Luft-Einlassöffnung 36 versehen, in die in Pfeilrichtung 37 von außen Druckluft eingeblasen wird. Die Druckluft ist vorzugsweise trocken und vorgewärmt und strömt in der Dosierschnecke 32 in gleicher Richtung wie das zu befördernde Kunststoffgut in Richtung zur Einzugsöffnung 24 in den Extruder 2. Eine Restfeuchte des Kunststoffgutes in der Dosierschnecke 32 wird von der Druckluft aufgenommen. Durch die erfindungsgemäße Ausführung des Extruders 2 mit mindestens einer Dampf-Auslassöffnung 41 stromaufwärts von der Einzugsöffnung strömt die Luft bzw. der Dampf entgegen der Förderrichtung 25 in Pfeilrichtung entlang des Luft/Dampfpfads 28 im Abschnitt 221 zur Dampf-Auslassöffnung 41. Das Kunststoffmaterial wird im Abschnitt 222 des Extruders aufgeschmolzen, daran anschließend im Abschnitt 223 komprimiert, und verschließt in der Austragszone 224 damit luftdicht die vorigen Abschnitte, sodass der Dampf im Inneren des Extruders 2 nicht oder nur als kleiner Teilstrom aus der Austragsöffnung 26 austreten kann.

Die Vorrichtung zur Dampfabfuhr 4 umfasst in Fig. 2 eine Dampf-Auslassöffhung 41, die im Extrudergehäuse 21 stromaufwärts von der Einzugsöffnung 24 vorgesehen und die an eine Dampfableitung 42 angeschlossen ist. Das Luft/Dampfgemisch gelangt anschließend in einen Wasserabscheider 43, wird darin abgekühlt und die Feuchte als Kondensat abgeschieden. Die Abluft aus dem Wasserabscheider wird von einer Dampf-Absaugvorrichtung 44, die vorzugsweise als Seitenkanalverdichter ausgebildet ist, abgesaugt. Mit dieser Dampf-Absaugung 44 ist in der gesamten Vorrichtung zur Dampfabfuhr ein leichter Unterdruck vorhanden, der eine zuverlässige Absaugung des Luft/Dampfgemischs aus dem Abschnitt 221 des Extruders 2 gewährleistet.

Fig. 2 zeigt ein Detail des Extruders 2 der Extrusionsvorrichtung 1 sowie eine Schnittansicht des Bodens einer besonderen Ausführung einer Zerkleinerungsvorrichtung 34 für das Kunststoffgut. Im Bodenbereich der Zerkleinerungsvorrichtung 34 sind mehrere Luft-Einlassöffnungen 36 vorgesehen, in die in Pfeilrichtung 37 jeweils Druckluft zur Trocknung des feuchten Kunststoffgutes eingeblasen wird. In dieser Ausführung gelangt die zugeführte Luft gemeinsam mit dem zerkleinerten Kunststoffgut, durch beispielsweise keilförmig angebrachte Bleche oder Stege am Boden der Zerkleinerungsvorrichtung geleitet, zu einer Öffnung 35 und weiter in die darunter befindliche Dosierschnecke 32 des Kunststoffgut-Förderers 3. Zusätzlich können auch eine oder mehrere weitere Luft-Einlassöffnungen 36 direkt im Gehäuse 31 der Dosierschnecke 32 des Kunststoffgut-Förderers 3 angebracht sein, durch die ebenfalls Luft, vorzugsweise Druckluft, eingeblasen wird. Auf deren Darstellung wurde in Fig. 2 verzichtet, da sich diese Öffnung oder Öffnungen in der Draufsicht unsichtbar unterhalb der im Schnitt gezeigten Zerkleinerungsvorrichtung 34 befinden.

Die eingeblasene Luft strömt wiederum durch die Dosierschnecke 32 zur Einzugsöffnung 24 und von dort in Pfeilrichtung entlang eines Luft/Dampfpfads 28 im Abschnitt 221 zur Dampf-Auslassöffnung 41 im Extrudergehäuse 21. Fig. 2 zeigt eine Dampf-Auslassöffnung 41 im Bereich der mit einem Gegengewinde 27 unter Bildung einer geringen Spaltbreite 29 zwischen Gegengewinde 27 und Extrudergehäuse 21 ausgeführten Extruderschnecke 22. Das Luft/Dampfgemisch verlässt die Extrusionsvorrichtung 1 über eine Dampfableitung 42. Ein vorzugsweise vorgesehener Wasserabscheider in der Dampfableitung sowie eine möglicherweise vorhandene Absaugvorrichtung für den Dampf sind in Fig. 2 nicht dargestellt.

Das aufzubereitende Kunststoffgut wird in Pfeilrichtung 25 umgelenkt, sobald es von der Dosierschnecke 32 durch die Einzugsöffnung 24 in das Innere des Extruders 2 befördert und dort von der Extruderschnecke 22 erfasst wird. Wie in Fig. 1 wird auch in der Ausführung von Fig. 2 der Abschnitt 221 möglichst frei von Kunststoffmaterial gehalten. Sollte Kunststoffgut dennoch stromaufwärts von der Einzugsöffnung 24 in den Abschnitt 221 gelangen, so verhindert der an die Antriebsvorrichtung 23 angrenzende Abschnitt mit Gegengewinde 27 und einer geringen freien Spaltbreite 29 zuverlässig ein Verblocken des Luft/Dampfpfads 28. Dampf kann damit zuverlässig über die Auslassöffnung 41 aus dem Inneren des Extruders 2 ausgetragen werden.

## Patentansprüche

1. Vorrichtung (1) zum Extrudieren von thermoplastischem Kunststoffgut, mit einem Extrudergehäuse (21), in dem eine durch eine Antriebsvorrichtung (23) angetriebene Extruderschnecke (22) um ihre Achse drehbar gelagert ist und das eine Einzugsöffnung (24) aufweist, an die ein Kunststoffgut-Förderer (3) angeschlossen ist, der mindestens eine Luft-Einlassöffnung (36) aufweist, wobei das Extrudergehäuse (21) stromaufwärts von der Einzugsöffnung (24) mindestens eine Dampf-Auslassöffnung (41) aufweist und von der Einzugsöffnung (24) zur Dampf-Auslassöffnung (41) ein Luft/Dampfpfad (28) definiert ist, wobei an der Extruderschnecke (22) im Bereich des Luft/Dampfpfads (28) ein Gegengewinde (27) angeordnet ist und das Gegengewinde (27) dieselbe Gangrichtung aufweist wie die Schneckenwendel der Extruderschnecke (22), **dadurch gekennzeichnet, dass** das Gegengewinde (27) an der Extruderschnecke (22) im Bereich des Luft/Dampfpfads (28) mit einer im Vergleich zur Steigung der Schneckenwendel der Extruderschnecke (22) geringeren Steigung ausgestattet ist.

2. Extrusionsvorrichtung (1) nach Anspruch 1, **dadurch gekennzeichnet, dass** der Luft/Dampfpfad (28) in einem Spalt (29) zwischen der Innenfläche des Extrudergehäuses (21) und der Extruderschnecke (22) verläuft.

3. Extrusionsvorrichtung (1) nach Anspruch 1 oder 2, **dadurch gekennzeichnet, dass** das Gegengewinde (27) an der Extruderschnecke (22) im Bereich des Luft/Dampfpfads (28) mit einer im Vergleich zur Schneckenwendel der Extruderschnecke (22) geringeren Gangtiefe ausgestattet ist.

4. Extrusionsvorrichtung (1) nach einem der Ansprüche 1 bis 3, **dadurch gekennzeichnet, dass** zwischen dem Gegengewinde (27) und dem Extrudergehäuse (21) eine Spaltbreite (29) von weniger als 1 mm, vorzugsweise von weniger als 0,5 mm vorhanden ist.

5. Extrusionsvorrichtung (1) nach einem der vorhergehenden Ansprüche, **dadurch gekennzeichnet, dass** an die mindestens eine Dampf-Auslassöffnung (41) eine Dampf-Absaugvorrichtung (44) angeschlossen ist.

6. Extrusionsvorrichtung (1) nach Anspruch 5, **dadurch gekennzeichnet, dass** die Dampf-Absaugvorrichtung (44) als Seitenkanalverdichter ausgebildet ist.

7. Extrusionsvorrichtung (1) nach Anspruch 5 oder 6, **dadurch gekennzeichnet, dass** zwischen der Dampf-Auslassöffnung (41) und der Dampf-Absaugvorrichtung (44) ein Wasserabscheider (43) angeschlossen ist.

## Claims

1. A device (1) for extruding thermoplastic material, having an extruder housing (21) in which an extruder screw (22) driven by a drive device (23) is supported rotatably about the axis thereof, and which comprises an intake opening (24) to which a plastic material feeder (3) is connected, which comprises at least one air inlet opening (36), wherein said extruder housing (21) comprises at least one vapor outlet opening (41) upstream of the intake opening (24) and an air/vapor path (28) is defined from the intake opening (24) to the vapor outlet opening (41), wherein a counter-thread (27) is arranged at the extruder screw (22) in the region of the air/vapor path (28) and the counter-thread (27) has the same path direction as the screw worm of the extruder screw (22), **characterized in that** said counter-thread (27) is provided at the extruder screw (22) in the region of the air/vapor path (28) with a smaller incline compared with the incline of the screw worm of the extruder screw (22).

2. An extrusion device (1) according to claim 1, characterized that the air/vapor path (28) extends in a gap (29) between the internal surface of the extruder housing (21) and the extruder screw (22).

3. An extrusion device (1) according to claim 1 or 2, **characterized in that** the counter-thread (27) is provided at the extruder screw (22) in the region of the air/vapor path (28) with a smaller flight depth compared with the screw worm of the extruder screw (22).

4. An extrusion device (1) according to any of claims 1 to 3, **characterized in that** a gap width (29) of less than 1 mm, preferably less than 0.5 mm, is present between the counter-thread (27) and the extruder housing (21).

5. An extrusion device (1) according to any of the preceding claims, **characterized in that** a vapor suction device (44) is connected to the at least one vapor outlet opening (41).

6. An extrusion device (1) according to claim 5, characterized that the vapor suction device (44) is formed as a lateral channel compressor.

7. An extrusion device (1) according to claim 5 or 6, characterized that a water separator (43) is connected between the vapor outlet opening (41) and the vapor suction device (44).

## Revendications

1. Dispositif (1) pour extruder une matière plastique thermoplastique, avec un boîtier d'extrudeuse (21) dans lequel une vis d'extrudeuse (22) entraînée par un dispositif d'entraînement (23) est montée pivotante autour de son axe et qui inclut une ouverture d'introduction (24) à laquelle est raccordé un convoyeur de matière plastique (3) qui inclut au moins une ouverture d'entrée d'air (36), dans lequel le boîtier d'extrudeuse (21) inclut en amont de l'ouverture d'introduction (24) au moins une ouverture de sortie de vapeur (41), et un chemin d'air/vapeur (28) est défini depuis l'ouverture d'introduction (24) vers l'ouverture de sortie de vapeur (41), dans lequel un pas de vis (27) est agencé au niveau de la vis d'extrudeuse (22) dans la zone du chemin d'air/vapeur (28) et le pas de vis (27) présente la même direction de spire que l'hélice de la vis d'extrudeuse (22), **caractérisé en ce que** le pas de vis (27) au niveau de la vis d'extrudeuse (22) dans la zone du chemin d'air/vapeur (28) présente une inclinaison plus faible par comparaison à l'inclinaison de l'hélice de la vis d'extrudeuse (22).

2. Dispositif d'extrusion (1) selon la revendication 1, **caractérisé en ce que** le chemin d'air/vapeur (28) s'étend dans une fente (29) entre la surface intérieure du boîtier d'extrudeuse (21) et la vis d'extrudeuse (22).

3. Dispositif d'extrusion (1) selon la revendication 1 ou 2, **caractérisé en ce que** le pas de vis (27) au niveau de la vis d'extrudeuse (22) dans la zone du chemin d'air/vapeur (28) présente une profondeur de spire plus faible par comparaison à l'hélice de la vis d'extrudeuse (22).

4. Dispositif d'extrusion (1) selon l'une des revendications 1 à 3, caractérisé en ce, entre le pas de vis (27) et le boîtier d'extrudeuse (21), il existe une largeur de fente (29) inférieure à 1 mm, de préférence inférieure à 0,5 mm.

5. Dispositif d'extrusion (1) selon l'une des revendications précédentes, **caractérisé en ce qu'**un dispositif d'aspiration de vapeur (44) est raccordé à ladite au moins une ouverture de sortie de vapeur (41).

6. Dispositif d'extrusion (1) selon la revendication 5, **caractérisé en ce que** le dispositif d'aspiration de vapeur (44) est réalisé sous forme de compresseur à canal latéral.

7. Dispositif d'extrusion (1) selon la revendication 5 ou 6, **caractérisé en ce qu'**un séparateur d'eau (43) est raccordé entre l'ouverture de sortie de vapeur (41) et le dispositif d'aspiration de vapeur (44).
